Europäisches Patentamt

European Patent Office

Office européen des brevets

(11) Publication number: **0 122 996**
**B1**

(12) **EUROPEAN PATENT SPECIFICATION**

(45) Date of publication of patent specification: **27.04.88**

(21) Application number: **83306100.5**

(22) Date of filing: **07.10.83**

(51) Int. Cl.⁴: **B 26 D 1/40**

(54) **Rotary web shearing machine.**

<table>
<tr><td>

(30) Priority: **15.04.83 US 485451**

(43) Date of publication of application:
**31.10.84 Bulletin 84/44**

(45) Publication of the grant of the patent:
**27.04.88 Bulletin 88/17**

(84) Designated Contracting States:
**DE FR GB**

(56) References cited:
**CH-B- 447 993**
**DE-A-2 431 543**
**DE-C- 814 236**
**FR-A- 860 091**
**GB-A-1 103 102**
**US-A-3 037 396**
**US-A-3 570 348**
**US-A-3 946 629**

</td><td>

(73) Proprietor: **Martin, Merrill David**
**2 Mall Court**
**Oakland, California 94611 (US)**

(72) Inventor: **Martin, Merrill David**
**2 Mall Court**
**Oakland, California 94611 (US)**

(74) Representative: **MacGregor, Gordon et al**
**ERIC POTTER & CLARKSON 14 Oxford Street**
**Nottingham, NG1 5BP (GB)**

</td></tr>
</table>

Courier Press, Leamington Spa, England.

## Description

This invention relates to a rotary web shearing machine.

The art of manufacture of corrugated cartons and the like entails the operation of cutting sections of the corrugated web as it discharges from the corrugating machine to predetermined lengths in a continuous process. For this purpose, machines having rotary cutting elements or knives which are programmed to properly shear the web as it moves through the machine continuously are utilized.

It has been found that the rotary knives or shears of the cutter operate more advantageously when the cutter or blade is mounted helically upon the rotary cutter. The helical configuration permits the cutting blade to move progressively through the web rather than making a straight through vertical cut which is accompanied by a high pressure resistance from the web instantaneously and consequence stress upon the machine. The advantage of a helical rotary cutter was set forth in US—A—3,380,328.

US—A—4,183,271, describes a web shearing machine employing a plurality of cutters arranged in pairs so that two helical cutters work in conjunction with each other and the advantage of the helical cutters over the straight knife are set forth in substantial detail in this disclosure.

FR—A—860,091, discloses a rorary shear including two co-operating helical blades mounted on respective rollers, the helical blades being axially spring urged towards each other to provide maintenance of contact between the blades thereby giving a good cutting action. This shear is designed for cutting fabric, ribbons braiding etc. and is not suitable for a rotary shear where a fixed clearance is required between blades.

DE—A—2431543 discloses a rotary shear with two parallel cutting blades carried on respective drums which can be separated to suspend the cutting action by axial movement of one drum relative to the other. the drums are driven with respect to one another by helical gears and the relative axial movement provided by actuation of a pressure cylinder causes a contra rotation of one drum with respect to the other thus opening a gap between the cutting blades to suspend the cutting action. An adjustable closely defined clearance between the blades is not achieved by this type of rotery shear.

There is one problem particularly associated with the helical blades. This is brought about by the necessity of maintaining the proper relationship between the cutting edges of the blades with special regard to clearance, which problem is aggravated by wear on the blades, necessitating frequent shutdown of the machine to adjust the blades with respect to one another. This is an operation which must be performed during intervals of two weeks to a month depending upon the operation and requires several hours to perform, which necessitates shutting down the whole production line for that length of time.

US—A—3,570,348 discloses a rotary web shearing machine having counter-rotatable first and second drums, provided with coacting helical cutting blades on their outer peripheral surfaces for shearing a web between cutting edges on the blades, said drums being mounted on shafts in bearings positioned on a frame of the machine; having adjustment means for imparting an axial adjustment to at least one of the shafts within its bearings, including a rotatable screw and a thrust bearing between the screw and an end of the adjustable shaft, so as to adjust the clearance between the cutting edges of the blades, and having meshed spur gears on the shafts for synchronously driving the drums in opposite directions of rotation so as to produce a web shearing action between the cutting edges. The drums have to be stopped and the drive is disconnected in order to provide the adjustment. The pre-characterising clause of Claim 1 is based on this disclosure.

The present invention overcomes this problem and enables adjustment to be carried out whilst the rollers are still operating, so that there is no loss of production. The present invention is characterised by the characterising features as set out in Claim 1.

Reference is made to the accompanying drawings, wherein:-

Figure 1 is a side elevation of a multiple web rotary shear machine according to this invention;

Figure 2 is a front partial cut-away perspective view of the machine of Figure 1 showing the arrangement of rotary helical cutting blades and supports;

Figure 3 is a schematic end view of rollers showing the operation of the cutting blades with respect to each other;

Figure 4 is a schematc top view of one pair of rollers showing the helical blades in relative position at the end of the cut-off operation;

Figure 5 is a cut-away showing in section a drive and support arrangement at the right end of one set of rollers (as viewed in Figure 1), which provides for the axial movement of one of the shafts, in this case, the bottom shaft and roller; and

Figure 6 is a cut-away showing in section the drive arrangement and supports at the opposite end to that shown in Figure 5.

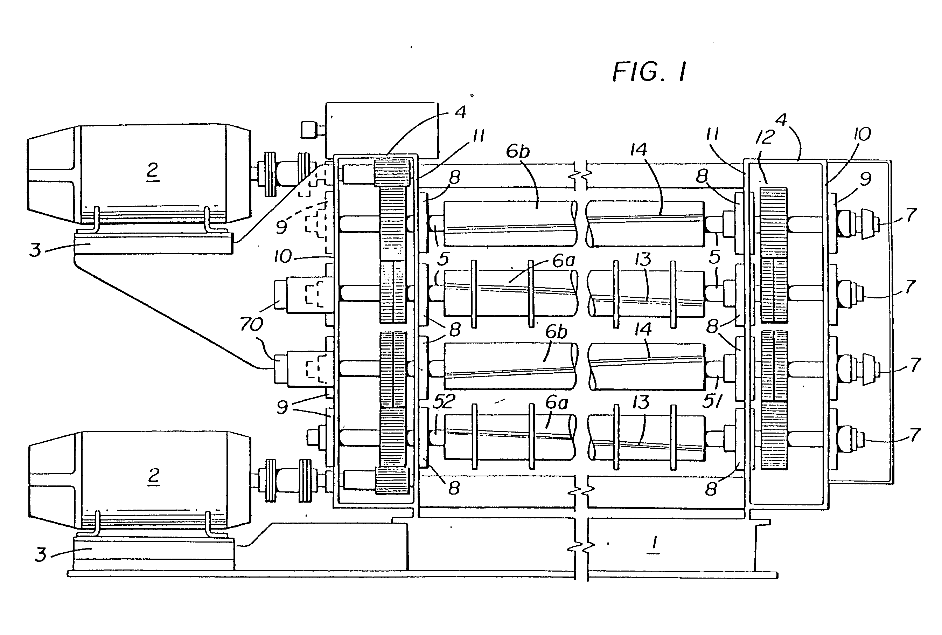

Referring first to Figure 1, there is seen a machine base 1 which is concrete filled, as described in US—A—4,183,271, and motor drives 2 mounted on platforms 3. Bearing frames and gear housing are shown at 4 and drive shafts at 5, 51 and 52.

Rotating hollow cylinders are shown in pairs 6a, being lower, and 6b upper respectively.

Shaft ends are shown at 7, inside bearings at 8 outside bearings at 9. Outside bearing support plates are seen at 10 and inside bearing support plates at 11, all forming a part of the bearing frames 4.

An anti-backlash transmission gearing train arrangement, as disclosed in US—A—3,037,396 is shown at 12.

Lower helical cutting blades 13 are shown carried by hollow drums, or rollers 6a and upper helical cutting blades 14 shown carried by drums, or rollers 6b.

Digital encoders for the machine as described in US—A—4,183,271, are shown at 70.

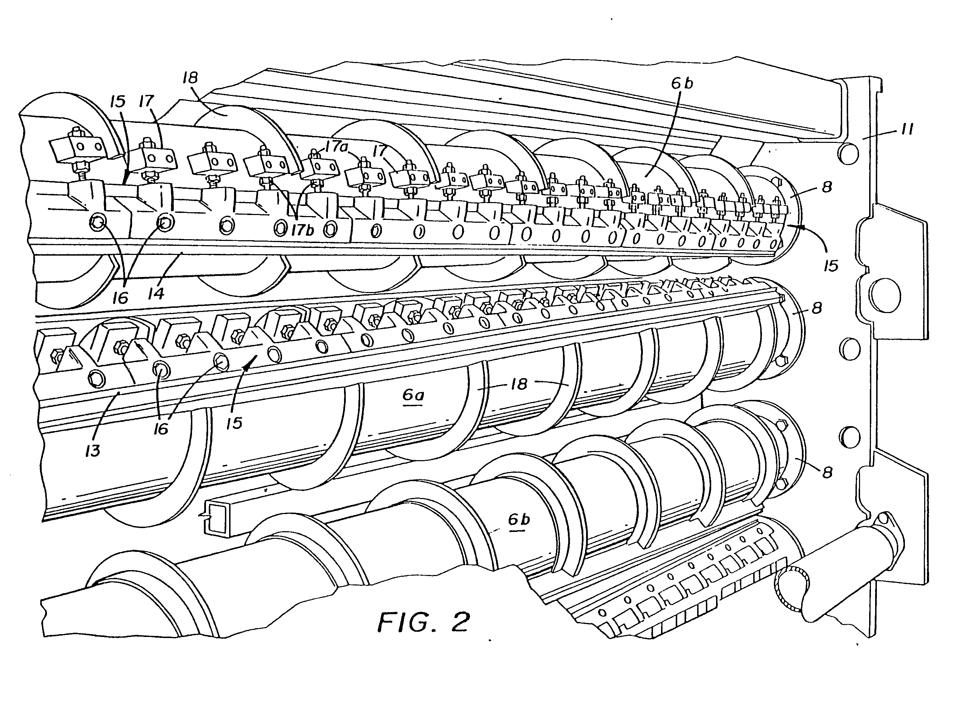

Referring now to Figure 2, there are again seen somewhat enlarged cutting rollers 6a and 6b, having mounted thereon helical cutting blades 13 and 14 respectively. The cutting blades are held in position in the helical slots in the rollers by means of blade holding assemblies 15 which are fastened to the rollers by means of holding down screws 16 which provide a certain amount of slack for limited circumferential movement of the holding assemblies 15. The holding assemblies are fastened down against the rollers by fastening blocks 17 which are equipped with stud and nut adjustments 17a and 17b respectively which permit circumferential movement of the blade adjusting assemblies 15 and consequently adjustment of the blades themselves.

Semi-circular guides 18 are positioned on the rollers to prevent sagging of the cut-off end of the webs as they pass through the cutting blades 13 and 14.

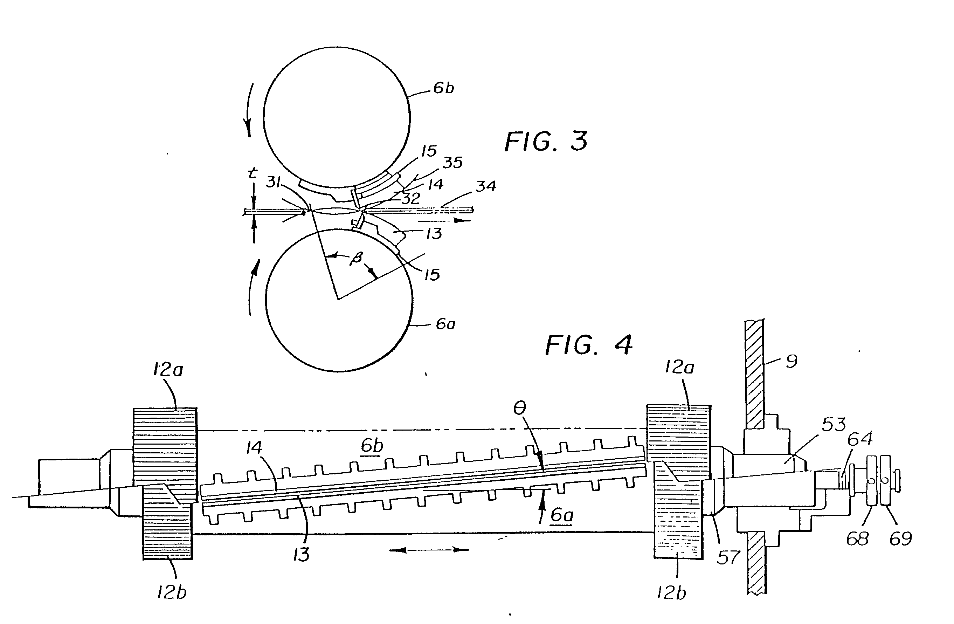

To better understand the relative action of the helical cutting blades 13 and 14, reference should be had to the schematic diagram of Figure 3. Web material 34 with thickness "t" makes initial contact with cutting edges at 31 and completes its cut at 32. The locus of the cutting blades as the cylinders rotate is indicated by curve 35 and the blades must rotate through an angle Beta for a completion of the cut which is governed by the velocity of web 34 as set forth in US—A—4,183,271.

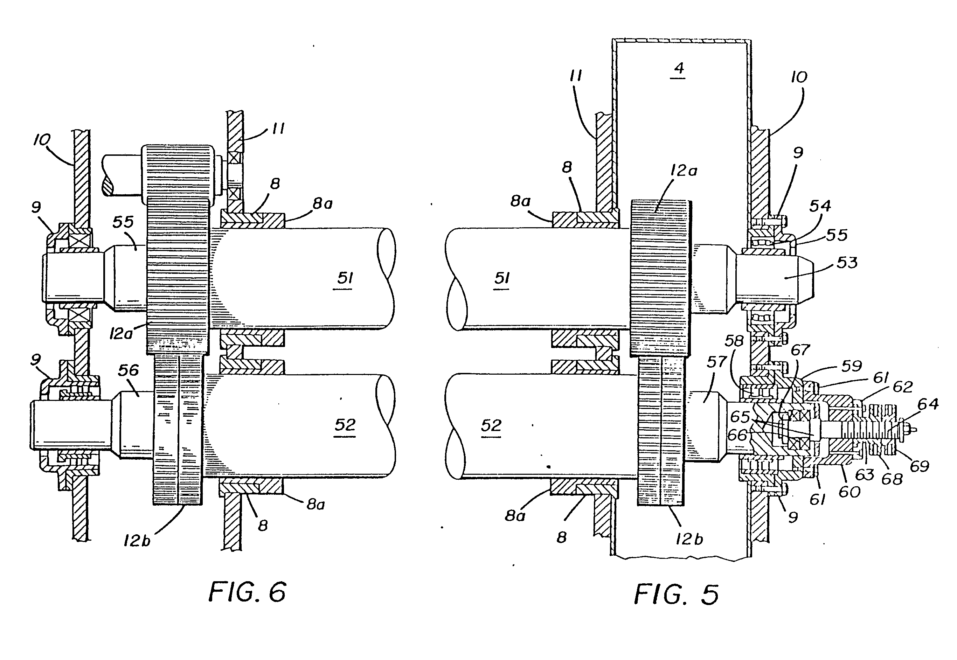

Referring now to Figure 4, there is shown a top view illustrating the diagrammatic relation between the rollers 6a and 6b and the axial relative positioning of the helical cutting blades 13 and 14 as carried by the rollers. Lower rollers 6a carrying cutting blades 13 are arranged for axial horizontal movement with respect to blade 14 by means of horizontally movable shaft 57 as hereinbelow more fully described. It is evident from this diagram that axial motion of shaft 57 and of roller 6a relative to roller 6b brought about by movement of adjusting screw 64 and adjusting lug 68 (as described more fully with respect to Figure 5), produces the desired relative motion between blade 13 and blade 14. The movement of the shaft is permitted by the fact that the backlash prevention gear train 12 in this instance is constructed so that the faces of the upper pinions 12a are at least one inch (2.5 cm) wider than the lower pinions 12b, thereby permitting one-half inch (1.2 cm) travel of the shaft horizontally in either direction.

Referring now to Figure 5 and Figure 6, there are shown like numbers for like parts appearing on Figure 1 as applied to one set of rollers and cutters which illustrate the mechanism by which the relative axial motion of one shaft and adjustment of the cutting blades while in motion is achieved. The upper backlash gears 12a are shown with wider faced teeth than the lower ones 12b to permit this relative motion as hereinbefore mentioned. Shaft 51 shown on Figure 5 has positioned on its reduced end 53, a spherical or tapered roller bearing 54 in housing 55 which prevents axial motion of shaft 51 and consequently of roller 6b. This entire assembly is carried by outside bearing holders 9 on the opposite end of shafts 51 and 52 as seen on Figures 5 and 6. The reduced ends of shafts 51 and 52 are carried in ordinary sleeve or roller bearings as shown in holder 9 mounted on frame 10. A similar condition is true of the corresponding end of shaft 52 in Figure 6. The bearing positioned thereon permits axial motion of shaft 52. The usual bearing seals are provided at 8a.

At the right end of shaft extension 57 when facing Figure 5 is shown the mechanism whereby shaft 52 may be moved axially along with drive gears 12b while it is in rotation, thus bringing the helical blades 13 and 14 in closer contact as illustrated in Figure 4. A sleeve-type roller bearing 58 is mounted in housing 59 which is fastened to bearing support plate 10 as shown. To this bearing housing is attached an additonal adjuster housing 60, which is fastened to the bearing housing by means of bolts 61. A clamp 62 serves to fasten to this adjuster, housing the adjusting nut 63, which is threaded to receive adjusting screw 64. Adjusting screw 64 is equipped with collars 65 which hold in position thrust bearing 66. Thrust bearing 66 is positioned in the recess 67 in shaft 57 so that it can transmit the motion from adjusting screw 64 to shaft 57. Adjusting screw 64 is equipped with adjusting knob 68 which is disposed for rotating adjusting nut 63 and consequently movement of the threaded adjusting shaft 64. Adjusting knob lock 69 serves to hold adjusting knob 68 in any desired position after it has been so adjusted. It is thus evident that since adjusting shaft 64 may be moved in either direction while exerting a thrust on shaft 57 to bearing 67, axial adjustment may be made to shaft 57 while it is in rotation.

While the device of Figure 5 and Figure 6 is shown applied to lower shafts 51 and 52, it is evidentally equally applicable to the upper roller shafts 5 of Figure 1.

Adjusting knobs 68 and 69 are equipped with radial holes as shown for the insertion of operating levers (not shown) to assist in turning of these knobs.

The angle of the helix or helical angle of the cutting blade on the cylinder is designated as Theta on Figure 4 and will vary with the particular application, such as web width, shear resistance and load carrying capacity of shaft, machine bearings, shaft bearings and frame. I have found the usual range of five-tenths of a degree to three degrees to be satisfactory, with an average of one and one-half degrees. The adjustment of the blades towards each other will then vary from the tangent of one-half a degree to the tangent of three degrees or .0087" to .0612" per inch (0.022 to 0.155 cm) of axial movement of shaft 52 or blade 13. The pitch of the adjusting screw 64 is 12 threads per inch (approx. 5 per cm) thus obtaining an easy movement of the blades towards each other of from less than one-thousandth of an inch (0.002 cm) to approximately five-thousandths of an inch (0.013 cm) per turn. With a travel of one-half inch (1.25 cm) from the central position shown on Figure 4 and a helix angle of one and one-half degrees, and adjustment of thirteen-thousandths of an inch (0.033 cm) may be obtained.

Whenever the blades have become dull and irregular or unsatisfactory cuts are obtained, screw 64 is adjusted to bring lower cutting blade 13 in closer contact with upper blade 14 and the difficulty is overcome without having to shutdown the machine and take time to make the adjustment.

In the embodiment disclosed, one of a pair of co-acting helical cutting blades is moved axially while its companion blade remains in the same horizontal position, but it has been found that the invention is applicable, and is to a certain extent more advantageous, if both co-acting blades are disposed for simultaneous axial movement.

In this alternative embodiment, a mechanism such as shown on the right end of shaft 52 is positioned on the right end of shaft 51 in place of the spherical or roller bearing 54 (see Figure 5). Housing 59, bearings 58 and adjuster housing 60, with its appurtenant elements as shown on the end of shaft 52 are installed on shaft 51 and shaft end 53 is adapted to accept adjusting screw 64, knobs 68 and 69, adjusting nut 63, collars 65 and thrust bearing 66. In other words, the mechanism discloded on the outer end of shaft 52 is duplicated on the outer end of shaft 51, so that simultaneous axial motion of shaft 51 is possible to provide twice the amount of adjustment in clearance between the helical blades as in the former embodiment.

## Claims

1. A rotary web shearing machine having counter-rotatable first and second drums (6a, 6b), provided with coacting helical cutting blades (13, 14) on their outer peripheral surfaces for shearing a web between cutting edges on the blades, said drums being mounted on shafts (52, 51) in bearings (8, 9) positioned on a frame (10) of the machine; having adjustment means (60 to 66) for imparting an axial adjustment to at least one of the shafts (52) within its bearings, including a rotatable screw (64) and a thrust bearing (66) between the screw and an end (57) of the adjustable shaft (52), so as to adjust the clearance between the cutting edges of the blades, and having meshed spur gears (12a, 12b) on the shafts (52, 51) for synchronously driving the drums (6a, 6b) in opposite directions of rotation so as to produce a web shearing action between the cutting edges, characterised in that the meshed spur gears (12a, 12b) include two pairs of meshed spur gears, one pair being provided at each end of the shafts (52, 51), each spur gear having straight teeth defining tooth faces parallel to the gear axis, one (12b) of each pair of spur gears comprising means settable to prevent backlash, the other (12a) of each pair of spur gears having tooth faces of greater axial extent than those of said one gear (12b) so that the gears remain fully meshed and the backlash preventing means fully operative throughout the range of relative axial adjustment of the shafts, such that the shafts (52, 51) can be relatively axially adjusted by means of the rotatable screw (64) whilst continuing under rotational drive.

2. A rotary web shearing machine according to Claim 1, characterised in that one drum (6b) is fixed against axial movement within its bearings (54, 55) and the other drum (6a) is axially adjustable by said adjustment means (60 to 66).

3. A rotary web shearing machine according to Claim 2, wherein said one drum (6b) is fixed against axial movement by means of a spherical roller bearing (54) positioned within a housing (55) around the corresponding shaft (51).

4. A rotary web shearing machine according to Claim 1, characterised in that both of said drums are axially adjustable by the adjustment means (60—66).

5. A rotary web shearing machine according to any preceding claim, characterised in that the adjustment means includes thrust collars (65) in contact with opposite faces of the thrust bearing (66) and engaged by the screw (64), a manually adjustable member (68) secured to the screw, and a locking member (69) engaged on the screw (64) for holding it against rotation.

6. A rotary web shearing machine according to Claim 1 characterised in that the adjustment means comprises:

a hollow section (67) in the one end (57) of the shaft (52) of one of said drums (6a);

an adjusting housing (60) positioned around said hollow section (67) in the end of the shaft (52) of said one drum (6a);

said adjusting housing (60) being fixedly positioned on one end of said bearing housing (59) of said one drum;

the thrust bearing (66) being positioned in a circumferential groove in said hollow section (67) of said shaft engaging said end of said shaft;

thrust collars (65) positioned in contact with opposite faces of said thrust bearing;

the screw (64) engaging said thrust collars and projecting horizontally through said adjusting housing (60);

a nut (63) engaging said screw and fastened to the exterior of said adjusting housing;

an adjusting knob (68) forming a part of said nut (63) and disposed to effect the rotation of said nut and consequently the horizontal movement of said screw (64);

a locking knob (69) in threaded relation to said screw (64) and positioned thereon adjacent said adjusting knob (68);

whereby said screw (64) is maintained in a fixed position.

7. A rotary web shearing machine according to Claim 1, characterised in that the machine includes a plurality of pairs of first and second drums (6a, 6b) with helical cutting blades disposed to provide axial adjustment to one roller in each of said pairs of drums while said machine is in operation.

8. A rotary web shearing machine according to Claim 7, characterised in that during axial adjustment of said pairs of first and second drums, said first drum is maintained in a fixed horizontal position with respect to said second drum in each pair.

## Patentansprüche

1. Rotationsschneidemaschine für Materialbahnen mit einer ersten und einer zweiten gegenläufigen Trommel (6a, 6b), die auf ihren äußeren Umfangsflächen mit zusammenarbeitenden, schraubenförmigen Schneidklingen (13, 14) versehen sind, wobei die Trommeln mit Achsen (52, 51) in Lagern (8, 9) im Maschinengestell (10) sitzen; mit Einstelleinrichtungen (60 bis 66) zur axialen Verstellung mindestens einer der Achsen (52) innerhalb ihrer Lager mit einer drehbaren Schraube (64) und einem Drucklager (66) zwischen der Schraube und dem Ende (57) der verstellbaren Achse (52), um das Spiel zwischen den Schneidkanten der Klingen einstellen zu können und mit ineinandergreifenden Stirnrädern (12a, 12b) auf den Achsen (52, 51), so daß die Trommeln (6a, 6b) gegenläufig synchron angetrieben sind, und die Materialbahn zwischen den Schneidkanten zerschneiden, dadurch gekennzeichnet, daß die Stirnräder (12a, 12b) zwei Paar ineinandergreifende Stirnräder aufweisen, wobei auf jedem Ende der Achsen (52, 51) ein Räderpaar angeordnet ist und jedes Stirnrad eine Gradverzahnung aufweist, so daß die Zahnflanken parallel zur Zahnradachse verlaufen und ein Zahnrad (12b) jedes Radpaares mit einer Einrichtung zum Vermeiden des Flankenspiels ausgestattet ist und das andere Zahnrad (12a) jedes Radpaares mit Zahnflanden versehen ist, die in axialer Richtung gröber sind als die des anderen Rades (12b), so daß die Zahnrädern über den gesamten Verstellbereich der Achsen in Eingriff bleiben und das Flankenspiel ausgeschlossen ist und sich die Achsen während ihrer Rotationsbewegung in axialer Richtung mittels der drehbaren Schraube (64) einstellen lassen.

2. Rotationsschneidemaschine nach Anspruch 1, dadurch gekennzeichnet, daß eine Trommel (6b) in ihren Lagern (54, 55) gegenüber axialen Bewegungen gesichert ist une die andere Trommel (6a) mittels Einstelleinrichtungen (60—66) verstellbar ist.

3. Rotationsscheidemaschine nach Anspruch 2, dadurch gekennzeichnet, daß die eine Trommel (6b) gegenüber axialen Bewegungen durch ein Tonnenlager (54) im Gehäuse (55) auf der entsprechenden Achse (51) gesichert ist.

4. Rotationsschneidemaschine nach Anspruch 1, dadurch gekennzeichnet, daß beide Trommeln mittels der Einstelleinrichtungen (60—66) verstellbar sind.

5. Rotationsschneidemaschine nach einem der vorausgehenden Ansprüche, dadurch gekennzeichnet, daß die Einstelleinrichtung einen mit den gegenüberliegenden Flächen des Drucklagers (66) in Berührung stehenden und von der Schraube (64) beaufschlagten Druckring (65) einen an der Schraube befestigten Einstellgriff (68) und ein die Schraube gegen Verdrehen sicherndes Feststellglied (69) aufweist.

6. Rotationsschneidemaschiene nach Anspruch 1, dadurch gekennzeichnet, daß die Einstelleinrichtung folgende Merkmale aufweist:

einen hohlen Abschnitt (67), in dem einen Ende (57) der Achse (52) der einen Trommel (6a);

ein Gehäuse (60) um den hohlen Abschnitt (67) im Ende der Achse (52) Trommel (6a);

das Gehäuse (60) ist dabei fest auf dem Lagergehäuse (59) der Trommel angeordnet;

das Drucklager (66) ist in einer Umfangsnut im hohlen Abschnitt (67) der Achse angeordnet;

die Druckringe (65) sind mit den gegenüberliegenden Flächen des Drucklagers in Berührung angeordnet;

die auf den Druckringen aufliegende Schraube (64) erstreckt sich horizontal durch das Gehäuse (60);

auf der Schraube sitzt eine auf der Außenseite des Gehäuses befestigte Mutter (63);

ein Einstellgriff (68) bildet einen Teil der Mutter (63) und läßt sich mit dieser drehen, was zur horizontalen Verschiebung der Schraube (64) führt;

ein Sicherungsknopf ist auf die Schraube (64) neben dem Einstellgriff geschraubt; wobei die Schraube festgehalten ist.

7. Rotationsschneidemaschine nach Anspruch 1, dadurch gekennzeichnet, daß eine Vielzahl Paare von ersten und zweiten Trommeln (6a, 6b) mit schraubenförmigen Schneideklingen vorgesehen sind und sich jeweils eine Trommel jedes Paares während des Betriebes axial verstellen läßt.

8. Rotationsschneidemaschine nach Anspruch 7, dadurch gekennzeichnet, daß bei der axialen Verstellung der aus ersten und zweiten Trommeln gebildeten Paare jeweils die erste Trommel gegenüber der zweiten Trommel jedes Paares in einer festen horizontalen Position gehalten ist.

## Revendications

1. Machine rotative à cisailler des bandes comportant des premier et second tambours (6a, 6b) tournant dans des sens opposés, dont les surfaces périphériques extérieures portent des lames hélicoïdales coopérantes (13, 14) de coupe destinées à cisailler une bande entre des arêtes de coupe des lames, lesdits tambours étant montés sur les arbres (52, 51) dans des paliers (8, 9) disposés sur un bâti (10) de la machine; comportant des moyens de réglage (60 à 66) destinés à effectuer un réglage axial sur au moins un des arbres (52) dans ses paliers, comprenant une vis rotative (64) et un palier de butée (66) entre la vis et l'extrémité (57) de l'arbre réglable (52), afin de régler le jeu entre les arêtes de coupe des lames, et comportant des roues (12a, 12b) à denture droite, en prise, situées sur les arbres (52, 51), pour entraîner en sysnchronisme les tambours (6a, 6b) dans des sens opposés de rotation afin de produire une action de cisaillage de bande entre les arêtes de coupe, caractérisée en ce que les roues (12a, 12b) à denture droite, en prise, comprennent deux paires de roues à denture droite en prise, une paire étant prévue à chaque extrémité des arbres (52, 51), chaque roue à denture droite comportant des dents droites qui présentent des faces parallèles à l'axe de la roue dentée, une première (12b) de la paire de roues à denture droite comprenant des moyens pouvant être positionnés pour empêcher le jeu entre dents, l'autre (12a) de chaque paire de roues à denture droite présentant des faces de dent d'une plus grande étendue axiale que celle de ladite première roue dentée (12b) afin que les roues dentées restent totalement en prise et que les moyens empêchant le jeu entre dents agissent totalement sur toute l'étendue du réglage axial relatif des arbres, pour que les arbres (52, 51) puissent être réglés axialement l'un par rapport à l'autre au moyen de la vis rotative (64) tout en restant entraînés en rotation.

2. Machine rotative à cisailler des bandes selon la revendication 1, caractérisée en ce qu'un premier tambour (6b) est fixé de façon à ne pas pouvoir se déplacer axialement dans ses paliers (54, 55), et l'autre tambour (6a) peut être réglé axialement par lesdits moyens de réglage (60 à 66).

3. Machine rotative à cisailler des bandes selon la revendication 2, dans laquelle ledit premier tambour (6b) est fixé de façon à ne pas pouvoir se déplacer axialement au moyen d'un palier sphérique à rouleaux (54) disposé dans un boîtier (55) autour de l'arbre correspondant (51).

4. Machine rotative à cisailler des bandes selon la revendication 1, caractérisée en ce que les deux tambours peuvent être réglés axialement par les moyens de réglage (60—66).

5. Machine rotative à cisailler des bandes selon l'une quelconque des revendications précédentes, caractérisée en ce que les moyens de réglage comprennent des bagues de butée (65) en contact avec les faces opposées du palier de butée (66) et contre lesquelles porte la vis (64), un élément (68), réglable manuellement, fixé à la vis, et un élément de verrouillage (69) en prise sur la vis (64) afin de l'empêcher de tourner.

6. Machine rotative à cisailler des bandes selon la revendication 1, caractérisée en ce que les moyens de reglage comprennent:

une partie creuse (67) dans la première extrémité (57) de l'arbre (52) de l'un desdits tambours (6a);

un boîtier de réglage (60) positionné autour de ladite partie creuse (67) dans l'extrémité de l'arbre (52) dudit tambour (6a;

ledit boîtier de réglage (60) étant positionné fixement sur une première extrémité dudit boîtier de palier (59) dudit premier tambour;

le palier de butée (66) étant positionné dans une gorge circonférentielle de ladite partie creuse (67) dudit arbre et portant contre ladite extrémité dudit arbre;

des bagues de butée (65) étant positionnées en contact avec des faces opposées dudit palier de butée;

la vis (64) étant en prise avec lesdites bagues de butée et faisant saillie horizontalement à travers ledit boîtier de réglage (60);

un écrou (63) en prise avec ladite vis et fixé à l'extérieur dudit boîtier de réglage;

un bouton (68) de réglage formant une partie dudit écrou (63) et disposé de façon à faire tourner ledit écrou et, par conséquent, à déplacer horizontalement ladite vis (64);

un bouton (69) de verrouillage vissé sur ladite vis (64) et positionné sur elle à proximité immédiate dudit bouton (68) de réglage;

de manière que ladite vis (64) soit maintenue dans une position fixe.

7. Machine rotative à cisailler des bandes selon la revendication 1, caractérisée en ce que la machine comprend plusieurs paires de premier et second tambours (6a, 6b) avec des lames hélicoïdales de coupe disposées de façon à permettre un réglage axial d'un rouleau de chacune desdites paires de tambours tandis que ladite machine est en fonctionnement.

8. Machine rotative à cisailler des bandes selon la revendication 7, caractérisés en ce que, durant un réglage axial desdites paires de premier et second tambours, ledit premier tambour est maintenu dans une position horizontale fixe par rapport audit second tambour de chaque paire.

FIG. 1

FIG. 2

FIG. 3

FIG. 4

0 122 996

FIG. 6

FIG. 5

0 122 996